Europäisches Patentamt

European Patent Office

Office européen des brevets

(19)

(11) Publication number: **0 283 101**
**A1**

# EUROPEAN PATENT APPLICATION

(12)

(21) Application number: 88200503.6

(22) Date of filing: 18.03.88

(51) Int. Cl.⁴ **A23C 9/13 , A23C 21/02**

(30) Priority: 20.03.87 NL 8700661

(43) Date of publication of application:
21.09.88 Bulletin 88/38

(84) Designated Contracting States:
**BE DE FR GB NL**

(71) Applicant: **DMV-CAMPINA B.V.**
**NCB-Laan 80 P.O. Box 13**
**NL-5462 GE Veghel(NL)**

(72) Inventor: **Schol, Cor Joop**
**Smientdonk 4**
**NL-5467 CA Veghel(NL)**
Inventor: **Ermens, Hermanus Wilhelmus**
**Adrianus**
**Boortorenstraat 12**
**NL-5841 AR Oploo(NL)**
Inventor: **Van de Hoven, Martinus Marinus**
**Gerardus Maria**
**Seringelaar 5**
**NL-5467 ED Veghel(NL)**

(74) Representative: **Smulders, Theodorus A.H.J.**
**et al**
**Vereenigde Octrooibureaux Nieuwe Parklaan**
**107**
**NL-2587 BP 's-Gravenhage(NL)**

(54) A process for the preparation of spreads and products obtained by that process.

(57) This invention relates to a process for the preparation of a spread and a base product suitable for its preparation. The base product is an acidified milk product enriched with whey protein, which product has been obtained by pasteurizing a mixture of a milk product rich in milk fat and a milk product rich in whey protein having a solids content of 25-32%, 5-50% by weight of which being fat and 24-48 % by weight being total protein, with the proviso that at least half of the protein consists of whey protein, and acidifying said mixture after addition of a yogurt starter culture to obtain a pH of 3.6-4.5. By mixing the thus prepared paste-like starting product with ingredients determining flavour and appearance a sweet or savoury spread is obtained.

EP 0 283 101 A1

# 0 283 101

## A process for the preparation of spreads and products obtained by that process.

This invention relates to a process for the preparation of an acidified milk product enriched with whey protein, suitable for the preparation of spreads, and to spreads obtained by that process.

US patent 4110476 discloses the preparation of liquid and frozen yogurt products having no more than 2 parts casein to 1 part whey protein. More in particular, as appears from the examples. these products also include products in which the greater part of the protein is whey protein, namely, 50-65%. With respect to the consistency of the resulting products it is observed that the addition of whey protein prevents the yogurt from thickening owing to the formation of a kind of curd having great firmness when the casein is destabilized during acidification. For the same purpose microcrystalline cellulose is added to the product as a stabilizer so that the liquid structure of the yogurt will also be maintained upon storage.

Furthermore, Dutch patent application 7500091, Canadian patent 1031622 and European patent application 0184627 disclose the preparation of yogurt products having a liquid consistency, which comprises adding along with the whey protein occurring in normal milk an additional amount of a product containing whey protein. None of these publications mentions the preparation of paste-like products suitable for use in a spread. Such stirrable and drinkable yogurts are in general too liquid, because they are to be poured out of a bottle or carton, so that they would also flow off a sandwich or cracker. On the other hand. stand yogurt of the Bulgarian type, which is mostly prepared by starting from a milk increased in solids content, is too firm in consistency.

French patent 2014742 discloses the preparation of spreads on the basis of acidified milk products which, according to the specification. contain 45% to 55% solids in which 70% to 80%, based on these solids, consists of fat. As far as in such products whey powder is added along with skim milk ingredients, as a raw material increasing the whey protein content, a stabilizer, such as locust bean flour, is to be added to such a spread to obtain a suitable spreadable consistency.

Spreadable milk products, fully on the basis of milk ingredients, without addition of milk-foreign thickeners or stabilizers, have been known so far only in the form of butter, low calory butter and the like or in the form of spreads rich in fat, as disclosed in the last-mentioned patent.

The object of the invention here described is, however, to produce a spreadable product containing only raw materials obtained from milk and further having a fat content not so high as the known dairy spreads.

Suitable products must have a consistency like butter, margarine, processed cheese, peanut butter, liver-pâté, jam, marmelade, jelly, spreads and the like.

It has now been found that a suitable base for spreads is obtained if a mixture containing 25 to 32% solids is prepared from a milk product rich in whey protein and a milk product rich in milk fat, the mixing being effected up to a fat content of 5 to 50 % by weight, based on the solids, and a total protein content of 24 to 48 % by weight. based on the solids, at least half of the total protein consisting of whey protein, and that the mixture is pasteurized and acidified after addition of a yogurt starter by incubation at an appropriate temperature until a pH of 3.6 - 4.5, after which the resulting paste-like product can be mixed with ingredients determining flavour and appearance to obtain a sweet or a savoury spread.

A tasty spread for crackers or toast can be prepared, e.g., by adding to such a base herbs. salt, pepper, mustard and/or flavouring so that a savoury product is obtained. But, on the other hand, also fruits or products prepared from fruits such as jam, marmelade, jelly, purée, with sugar can be admixed to obtain sweet-tasting sandwich spreads. Meat and meat products, fish and fish products, eggs, cheese, vegetables such as cucumber, radish, celery etc., nuts, groundnuts and other similar ingredients can be mixed through the base mass after appropriate reduction. If required, thickeners (for correcting deviations in consistency caused by such additions), colourings and flavourings, preservatives and the like can be incorporated in the product to obtain stability and to enhance the attractiveness of the spread. Furthermore, acids such as citric acid, acetic acid, malic acid, malonic acid and the like are good ingredients for obtaining flavour effects or enhancing the effect of lactic acid.

In the process according to the invention the starting substances may be whole milk, skim milk, whey or solutions of milk powders or whey powders, cream, sweet or sour butter or anhydrous butter fat, milk protein compositions of the type of caseinate or coprecipitate, whey protein concentrate or whey protein isolate in order to adjust the suitable ratios between water, fat, casein-protein, whey protein and further components in the mixture to be acidified.

Pasteurization of this mixture effects the destruction of undesirable microorganisms that could disturb the acidification. Furthermore, this operation influences the consistency of the final product as a result of the denaturation of the whey proteins. In this connection it may be useful to extend the heating time and to effect this heating at a higher temperature than would be necessary only for eliminating germs. Homogeni-

2

zation of the mass may serve to prevent flocculation of protein and further to effect a more stable distribution of the fat.

Before addition of a starter culture it is advisable first to cool the pasteurized mixture to the cultivation temperature. Cultures suitable for the purpose are substantially all the starters conventional in the manufacture of yogurt, but also other lactic acid bacteria known in dairy processes may be chosen if a specific flavour effect is to be obtained. As regards the typical yogurt cultures, the general desire is to have both a lactic acid former and a flavouring former present in the mixture of lactic acid organisms. In general, the acidification takes place in the same way as in the manufacture of yogurt. This means that after inoculation the mass is maintained at a temperature near 30 - 37°C, and as far as stirring is effected, air or oxygen is prevented, however, from dissolving in the fermenting mass so that an appropriate anaerobic environment is created. The fermentation can be stopped by cooling when the pH has reached 3.8 - 4.0.

Depending on the nature of the ingredients further present in the spread, an appropriate preservative effect will have to be provided for. In many cases it may be sufficient to mix the ingredients under normal hygienic conditions in order to make a product which, when cooled, remains stable for some time. More critical ingredients may call for an additional pasteurization or the addition of preservatives. It is also quite possible to pasteurize all the ingredients previously and then to carry out the mixing under aseptic conditions.

The products according to the invention are different from known products used as a spread in that they are based on a yogurt-like milk product rich in whey protein. As far as the sweet spreads are concerned, the products are comparable to jams, marmelade, jelly and the like. In that case a considerable content of milk protein gives the new products a special nutritional value. Only a product like chocolate paste also contained milk protein, but its flavour type and overall impression were quite different as compared with the products according to the invention.

The above likewise applies to savoury products according to the invention.

Well-known spreads on the basis of salad dressing with vinegar have a completely different flavour type.

In the process according to the invention a mixture of milk products containing 70 to 80% by weight of whey protein, based on the total protein, is preferably used.

The fat content of the mixtures to be acidified by the process according to the invention is preferably 35 to 45% by weight, based on the solids.

The invention will now be explained with reference to the following examples:

Example 1:

Skim milk obtained by taking the cream from whole milk, cream containing 45% fat, recovered in the same manner, and a whey protein isolate containing 78.0 % protein, based on solids, obtained by ultrafiltration of cheese whey, were combined to form a mixture containing 10% fat, 10% protein, about 8/10 parts of which were whey protein, and 8% other solids.

The mixture was heated to 80°C and passed through a two-stage homogenizer adjusted to 250/50 atmospheric pressure. In total, the mass was pasteurized in a continuous stream, the residence time being 2.5 minutes, after which the product was cooled to 31°C.

A starter culture of the type ISt. obtained from the Nederlands Instituut voor Zuivel Onderzoek NIZO, cultured as conventional in the manufacture of yogurt, was added to the pasteurized and cooled liquid. The temperature was maintained at 31°C until the pH had decreased to 3.8 - 4.0, because of lactic acid formation, after which the dairy base for the preparation of spread was cooled to 5°C.

Example 2:

In 760 kg water 27 kg calcium caseinate. 100 kg whey protein isolate having 78.0% protein content, based on solids, and 57 kg whey powder were successively dissolved. At 45°C, 100 kg anhydrous butter fat in molten condition was added, and a homogeneous emulsion was made by means of a high-speed stirrer.

This emulsion was heated to 80°C, homogenized at 250/50 atmospheres in a two-stage homogenizer at that temperature and passed through a duct providing a hold up of 2.5 minutes to a cooler which cooled the pasteurized liquid to 30°C.

The acidification further proceeded exactly as specified in Example 1.

3

Example 3:

On the basis of the dairy base specified in Example 1, pureed fruit masses, if required with addition of nutrient acids and conventional natural colourings and flavourings, and sugar, mixtures were made having the following compositions:

| fruit composition: | dairy base: | sugar: |
|---|---|---|
| 45% Banana purée | 40% | 15% |
| 45% Kiwi purée | 40% | 15% |
| 45% Mandarin purée | 40% | 15% |
| 45% Currant purée | 40% | 15% |
| 45% Strawberry purée | 40% | 15% |
| 45% Cherry purée | 40% | 15% |

The products were judged as to spreadability, release of moisture and flavour. All of the products showed a good consistency and were easily spreadable with a knife without flowing away or sticking excessively. A visible separation of a whey-like moisture was not observed. In most of the products flavour was judged reasonable to good or very good.

Example 4:

In a manner similar to that of Example 3 spreads were made on the basis of cinnamon, muesli, plums, nuts, peanuts and cocoa. As far as necessary, acid, flavouring, thickeners etc. were added. It turned out that with these flavour types the dairy base set forth in Example 2 could also be processed into acceptable products.

Example 5:

The dairy base set forth in Example 1 was mixed with various mixtures of herbs and spices in amounts of 4 to 10%. Both Italian style dressings with garlic and tomato and "fine herbs" products with chive, onion, dill, parsley and mustard were made.

Such flavoured products were mixed with finely minced meats, fillets of fish or shrimps, grated cheese and boiled egg to form savoury products adapted to be used as spreads on crackers or toast. When subjected to a pasteurizing heating, such products could be given a considerably longer shelf life without separation of whey-like liquids upon pasteurization or afterwards.

**Claims**

1. A process for the preparation of an acidified milk product enriched with whey protein, suitable for the preparation of spreads, characterized in that a mixture containing 25 to 32% solids is prepared from a milk product rich in whey protein and a milk product rich in milk fat, the mixing being effected up to a fat content of 5 to 50% by weight, based on the solids, and a total protein content of 24 to 48% by weight, based on the solids, at least half of which consists of whey protein, and that the mixture is pasteurized and acidified after addition of a yogurt starter culture by incubation at an appropriate temperature until a pH of 3.6 - 4.5, after which the resulting paste-like product can be mixed with ingredients determining flavour and appearance to obtain a sweet or savoury sandwich spread.

2. A process according to claim 1, characterized in that the mixture to be acidified contains 70 to 80% whey protein, based on the total protein.

3. A process according to claim 1, characterized in that the mixture to be acidified contains 35 to 45% by weight of fat, based on the solids.

4. A spread having a paste-like consistency, obtained by mixing an acidified milk product according to claim 1, containing 5 to 75% by weight of flavouring components selected from the group of fruits, fruit products, nuts, peanuts, vegetables, herbs, fish, fish products, meat, meat products, sugars, acids, salt, flavour, consistency and colour enhancing agents.

5. A spread having a paste-like consistency according to claim 4, characterized in that the product is heated before or after mixing with flavouring components to destroy or inactivate microorganisms present.

European Patent Office

**EUROPEAN SEARCH REPORT**

Application Number

EP 88 20 0503

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| D,Y | US-A-4 110 476 (K. RHODES) * Example 1; column 10, line 35 - column 11, line 13 * | 1-2,4,5 | A 23 C 9/13 A 23 C 21/02 |
| D,Y | FR-A-2 014 742 (UNILEVER) * Claims 1-5,7; example 4 * | 1-2,4,5 | |
| D,A | FR-A-2 256 726 (UNILEVER) *Claim 1; page 7, line 20 - page 8, line 9 * & NL-A-7 500 091 | 1 | |
| D,A | EP-A-0 184 267 (MELKUNIE HOLLAND) * Claims 1-3; page 6, line 25 - page 7, line 13; examples I,II * | 1 | |
| A | MILCHWISSENSCHAFT, vol. 41, no. 3, March 1986, pages 139-141, Munich, DE; W. BUCHHEIM et al.: " Technologische, physikalisch-chemische und sensorische Aspekte von Milch und Sauermilch mit modifiziertem Casein/Molkenprotein-Verhältnis" * Page 139; columns 1,2 * | 1 | TECHNICAL FIELDS SEARCHED (Int. Cl.4) A 23 C |
| A | FOOD SCIENCE & TECHNOLOGY ABSTRACTS, no. 85-05-P0108(85029380); L. TRATNIK et al.: "Yoghurt enriched with proteins of ultrafiltered whey", & Mljekarstvo, vol. 34, no. 7, pages 200-203, 1984 * Abstract * | 1 | |

The present search report has been drawn up for all claims

| Place of search | Date of completion of the search | Examiner |
|---|---|---|
| THE HAGUE | 16-06-1988 | DESMEDT G.R.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P0401)